# EUROPÄISCHE PATENTSCHRIFT

(11) **EP 0 907 884 B1**
(45) Veröffentlichungstag und Bekanntmachung des Hinweises auf die Patenterteilung: **19.02.2003**
(21) Anmeldenummer: 97928253.0
(22) Anmeldetag: 19.06.1997
(51) Int. Cl.: G01N 29/12, G01N 29/18, G01N 33/38

(54) **VERFAHREN ZUR PRÜFUNG DES FROST-TAU-WIDERSTANDS VON FESTKÖRPERN**
PROCESS FOR TESTING THE FREEZE-THAW RESISTANCE OF SOLIDS
PROCEDE D'ESSAI DE LA RESISTANCE AUX CYCLES GEL-DEGEL DE SOLIDES

(30) Priorität: 28.06.1996 DE 19626111
(43) Veröffentlichungstag der Anmeldung: 14.04.1999
(73) Patentinhaber: Setzer, Max, 45134 Essen (DE)
(72) Erfinder: Setzer, Max, 45134 Essen (DE)
(74) Vertreter: Zenz, Joachim Klaus, Dipl.-Ing.
(86) Internationale Anmeldenummer: EP9703217
(87) Internationale Veröffentlichungsnummer: WO98000710

(56) Entgegenhaltungen:
- EP-A- 0 448 896
- WO-A-96/08699
- DE-A- 2 556 588
- US-A- 3 504 532
- US-A- 4 283 956

## Beschreibung

Die Erfindung betrifft ein Verfahren zur Prüfung des Frost-Tau-Widerstands und/oder des Frost-Tausalz-Widerstands von Festkörpern. Insbesondere befaßt sich die Erfindung mit einer Erweiterung und Ergänzung des Verfahrens zur Frost- bzw. Frost-Tausalzprüfung, wie es aus der DE OS 39 28 130 des Anmelders bekannt ist.

Im Bauwesen sind Werkstoffe, Festkörper oder Bauteile häufig besonderen Umweltbelastungen ausgesetzt. Typische Umweltbelastungen sind Frost-Tau-Wechsel ohne und mit Taumitteleinflüssen. Im ersten Falle benötigen die umweltbelasteten Festkörper einen erhöhten Frost-Tauwiderstand; im zweiten Falle einen erhöhten Frost-Tausalz-Widerstand. Wie bereits in der Ausgangsdruckschrift gesagt, kann der Begriff "erhöhter Frost-Tausalz-Widerstand" uneingeschränkt auf andere wäßrige Lösungen übertragen werden, soweit das hier beschriebene Prüfverfahren betroffen ist.

Die Widerstandsprüfung poröser Festkörper umfaßt zwei Verfahrensabschnitte:
1. die Simulation des der Umweltbelastung entsprechenden äußeren Angriffs; und
2. die Messung bzw. Bestimmung der Schädigung des Festkörpers als Folge dieses äußeren Angriffs.

Bei der Bestimmung der Schädigung lassen sich zwei Schädigungsarten unterscheiden:
a) die äußere Schädigung, insbesondere die Abwitterung; und
b) die innere Schädigung, welche mehrere physikalische Materialeigenschaften, beispielsweise die Festigkeit und Elastizität erheblich vermindert und selten von außen erkennbar ist.

Beide Schädigungsarten treten an oder nahe exponierter Oberflächen auf. Auch die innere Schädigung ist in der Regel auf eine Zone im Bereich der angegriffenen Oberfläche beschränkt oder geht von der Beanspruchungsfläche aus. Allerdings ist der Übergang von geschädigtem zu ungeschädigtem Bereich bei der inneren Schädigung fließend. Daher ist es außerordentlich schwer, reproduzierbare, präzise Kriterien für die innere Schädigung anzugeben, die auch noch universell für eine ganze Materialgruppe gelten sollen.

Das aus der Ausgangsdruckschrift bekannte Verfahren befaßt sich insbesondere mit der Prüfung der äußeren Schädigung bzw. der Abwitterung. Die Genauigkeit und Reproduzierbarkeit der Prüfung wurde bei dem bekannten Verfahren dadurch verbessert, daß sichergestellt ist, daß die untersuchten Probekörper einen definierten Gehalt an Wasser mit oder ohne gelöste Stoffe - Taumittel - erhalten. Zu diesem Zweck wird der Festkörper vor Beginn des eigentlichen Prüfverfahrens konditioniert, insbesondere vorgetrocknet. Anschließend taucht man die Proben mit der Beanspruchungsfläche in die Lösung bzw. in Wasser ein und läßt die Lösung bzw. das Wasser durch kapillares Saugen in den Probenkörper eindringen. Daran schließt sich der Frost-Tau-Wechsel zur Simulation der Frost- bzw. der Frost-Tausalz-Belastung an.

Insoweit stimmen das Verfahren gemäß DE-OS 39 28 130 und das erweiterte Prüfverfahren gemäß vorliegender Erfindung weitgehend überein.

Aufgabe der vorliegenden Erfindung ist es, ein Prüfverfahren der eingangs genannten Art zur Verfügung zu stellen, mit dessen Hilfe auch die innere Schädigung des Festkörpers bzw. Probekörpers mit hoher Genauigkeit und reproduzierbaren Ergebnissen bestimmt werden kann.

Diese Aufgabe wird erfindungsgemäß gelöst durch ein Verfahren mit den Merkmalen des Patentanspruchs 1.

Die Simulation der Belastungsverhältnisse ist dadurch besonders gut, daß die Kälte- und Wärmezufuhr einachsig über die Beanspruchungsfläche erfolgt.

Die innere Schädigung eines Festkörpers, der mit den beschriebenen Verfahren einem Frost-Tauwechsel unterworfen wurde, äußert sich, wie durch Untersuchungen festgestellt wurde, vor allem in den folgenden physikalischen Größen:

Festigkeitsabfall, irreversible Längenänderung, Abfall des statischen E-Moduls, Abfall des dynamischen E-Moduls, Änderung der Dämpfung des dynamischen E-Moduls und Ausbreitungsänderung eines Ultraschallsignals.

Wenigstens eine dieser physikalischen Größen wird daher bei der Erfindung gemessen. Die Ergebnisse der Messung des gesamten Prüfverfahrens sind entsprechend den Kriterien der ISO 5725 reproduzierbar und wiederholbar und ermöglichen eine zuverlässige Quantifizierung der inneren Schädigung.

Aus der US-A-4283956 ist es in Verbindung mit einem gattungsfremden Verfahren bekannt, einen Festkörper dynamischen Lastwechseln auszusetzen und ihn zusätzlich mit Schwingungen bei der Eigenfrequenz zu beaufschlagen. Dadurch soll der Beginn von Rißbildungen im Festkörper bestimmt werden.

Aus der EP-A-0448896 ist ferner ein Verfahren zur zerstörungsfreien Bestimmung einer von der Ausbreitungsgeschwindigkeit von Ultraschallwellen abhängigen Körpereigenschaft bekannt.

Die Erfindung ist aber nicht auf ein spezielles Meßverfahren beschränkt. Die Auswahl des verwendeten Meßverfahrens erfolgt nach den jeweiligen Einsatzbedingungen und Genauigkeitsanforderungen. Es können bekannte oder auch neu entwikkelte Meßverfahren verwendet werden, die die physikalische Größe zumindest im Umfeld des Einsatzortes bzw. der Prüfanordnung zu messen gestatten.

Zur Bestimmung der inneren Schädigung können - ohne Anspruch auf Vollständigkeit - die folgenden Meßverfahren verwendet werden:

### A. Messung der Festigkeitsabnahme

An nicht beanspruchten Vergleichskörpern und an den behandelten Prüfkörpern wird die Druckfestigkeit, die Biegezugfestigkeit, die Spaltzugfestigkeit oder eine ähnliche Festigkeitsgröße zerstörend gemessen. Dies Verfahren ist teuer und aufwendig und hat den Nachteil, daß ein Prüfkörper nur einmal mit dem Bezugsfestkörper verglichen werden kann und danach endgültig zerstört ist. Eine Überwachung der Änderung der Schädigung in verschiedenen Phasen des Frost-Tau-Versuchs ist nicht möglich.

### B. Messung des statischen E-Moduls

Der statische E-Modul kann auf einer geeigneten Prüfpresse ermittelt werden. Die mit Poren versehenen Festkörper, insbesondere Beton, verformen sich aber nicht nur elastisch, sondern auch plastisch. Daher führt jede Belastung zu einer irreversiblen Verformung. Außerdem ist der E-Modul des Betons nicht linear, so daß eine Mindestlast erforderlich ist. Die Festigkeitsabnahme des statischen E-Moduls als Folge des Frostwiderstands ist unmittelbar gekoppelt mit einer Überschreitung des kritischen Wassersättigungsgrades. Bei Erreichen des kritischen Sättigungsgrades sinkt der E-Modul bereits nach wenigen Frost-Tauwechseln signifikant ab.

### C. Messung des dynamischen E-Moduls

Der dynamische E-Modul, und zwar mit seinem Real- und Imaginärteil, kann auf mehrere Arten bestimmt werden.

### C.1. Messung durch Eigenschwingung

Eine bewährte Methode ist die Messung der Eigenschwingung eines gegebenen Probebalkens. Auf geeignete Weise, z.B. mit einem Hammer, wird eine Eigenschwingung erzeugt. Bevorzugt wird die erste Grundschwingung angeregt. Sinnvoll ist es, wenn der Hammer einen Beschleunigungsaufnehmer enthält, so daß die Belastung reproduzierbar aufgegeben wird. Aus der Eigenschwingung läßt sich der E-Modul errechnen.

Wenn man einen Probebalken zur Eigenschwingung anregt und ihn gleichzeitig so lagert, daß er dämpfungsfrei schwingt, dann kann man mit der Messung neben der Eigenfrequenz auch die Eigendämpfung bestimmen. Dies kann dadurch erfolgen, daß der Probekörper in den Nodalpunkten z.B. auf 2 Klavierseiten gelagert wird. Durch geeignete Auswerteverfahren, wie durch Aufzeichnung der abklingenden Schwingungen oder durch einen Fourier-Analysator, können sowohl die Eigenfrequenz als auch die Dämpfung ermittelt werden.

### C.2 Messung des dynamischen E-Moduls mit Hilfe von Ultraschall

Mit Ultraschall kann der dynamische E-Modul auf zweierlei Weise gemessen werden.
1. Durch Anregung einer Eigenschwingung
2. durch Messung der Schallaufzeit einer Longitudinal- bzw. einer Transversalwelle.

Die Messung der Schallaufzeit hat den großen Vorteil, daß der Schall den Probekörper gerichtet durchschallen kann und zwar sowohl horizontal wie vertikal zur Angriffsfläche. Auch die Dämpfung läßt sich so richtungsspezifisch erfassen.

### D. Messung der irreversiblen thermischen Ausdehnung

Eine innere Frostschädigung ist stets mit einer irreversiblen thermischen Ausdehnung verbunden. Eine Möglichkeit, den Frostschaden zu bestimmen, besteht somit in einer gezielten Messung der thermischen Ausdehnung über geeignete Meßmarken.

### E. Messung der Ultraschall-Ausbreitungsrichtung

Die innere Schädigung eines Festkörpers ist in der Regel inhomogen und geht von der Beanspruchungssfläche aus. Bei dem erfindungsgemäßen Verfahren ist eine Schichtung der Schädigung parallel zur Beanspruchungsfläche besonders ausgeprägt. Entsprechend der inneren Schädigung ändert sich die Schallgeschwindigkeit, und ein unter einem schrägen Winkel eingestrahltes Ultraschallsignal ändert seine Ausbreitungsrichtung. Dies wird erfindungsgemäß zur Messung der inneren Schädigung ausgenutzt.

### F. Messung einer Oberflächenwelle

Es ist bekannt, die Schädigung von Naturstein durch die Anregung von Oberflächenwellen zu messen. Die Oberflächenwellen werden dadurch erzeugt, daß das Ultraschallsignal über ein Medium unter einem bestimmten Winkel auf die Meßoberfläche auftrifft. Es ist dies der Grenzwinkel zur Totalreflexion. Dadurch werden Ralleywellen an der Oberfläche des Prüfkörpers erzeugt, die unter dem gleichen Winkel in einen Empfänger abstrahlen.

Diese Messung eignet sich, wie die Erfindung erkannt hat; besonders für die Bestimmung der Schädigung, auch der inneren Schädigung von Festkörpern innerhalb des Verfahrensschritts e). Dabei kann die aus der DE-OS 38 130 bekannte Prüfanordnung mit großem Vorteil verwendet werden.

Eine besonders hoher Genauigkeitsgrad bei der Messung der inneren Schädigung eines Festkörpers läßt sich erfindungsgemäß durch ein kombiniertes Meßverfahren unter Bestimmung der reversiblen Längenänderung des untersuchten Festkörpers sowie unter Verwendung einer vergleichenden Ultraschallmessung erreichen, wenn das Verfahren gemäß Anspruch 5 angewendet wird.

In bevorzugter Weiterbildung der Erfingung werden auf dem zu prüfenden Festkörper, vorzugsweise an den Seitenflächen, jeweils Meßplatten so angebracht, daß sie nicht abwittern können. Die auf einander gegenüberliegenden Seiten angebrachten Meßplatten können u.a. dazu benutzt werden, die thermische irreversible Dehnung beim Frostangriff zu bestimmen. Es ist dabei sogar möglich, eine unterschiedliche Längenänderung oben und unten am untersuchten Festkörper zu bestimmen. Bei Verwendung planer Meßplatten kann ein Ultraschallsignal optimal in den Festkörper eingekoppelt werden, um so die Laufzeit und die Dämpfung des Ultraschalls genau zu bestimmen. Auf diese Weise kann der dynamische E-Modul und/oder dessen Dämpfung richtungsspezifisch, d.h. insbesondere parallel und/oder senkrecht zur Beanspruchungsfläche bestimmt werden.

Um eine einachsige Kälte- und Wärmezufuhr zum zu prüfenden Festkörper und ein entsprechend einachsiges kapillares Saugen der Flüssigkeit sicherzustellen, wird in bevorzugter Weiterbildung der Erfindung der zu prüfende Festkörper an den Seitenflächen versiegelt, während die Beanspruchungsfläche unversiegelt bleibt.

Im folgenden wird die Erfindung anhand einer in der Zeichnung dargestellten Versuchsanordnung näher erläutert. In der Zeichnung zeigt:
- Fig. 1: eine Versuchsanordnung ähnlich derjenigen gemäß Fig. 1 der DE-OS 39 28 130, anhand der der grundsätzlich Ablauf des erfindungsgemäßen Verfahrens erläutert werden kann;
- Fig. 2: ein Temperatur-Zeit-Diagramm, das einen bei der Frost-Tau-Wechsel-Belastung eines Festkörpers in der Versuchsanordnung gemäß Figur 1 typischen Temperaturzyklus veranschaulicht;
- Fig. 3: ein Temperatur-Zeit-Diagramm der Frost-Tau-Wechsel-Belastung bei der Versuchsanordnung gemäß Figur 1 im Vergleich zu herkömmlichen Versuchsanordnungen bzw. Tau-Wechsel-Belastungssimulationen;
- Fig. 4: eine schematische Darstellung einer Ultraschall-Meßanordnung zur Bestimmung der inneren Schädigung eines Festkörpers, der in einem für die Versuchsanordnung gemäß Figur 1 geeigneten, besonders ausgestalteten Probenbehälter angeordnet ist.

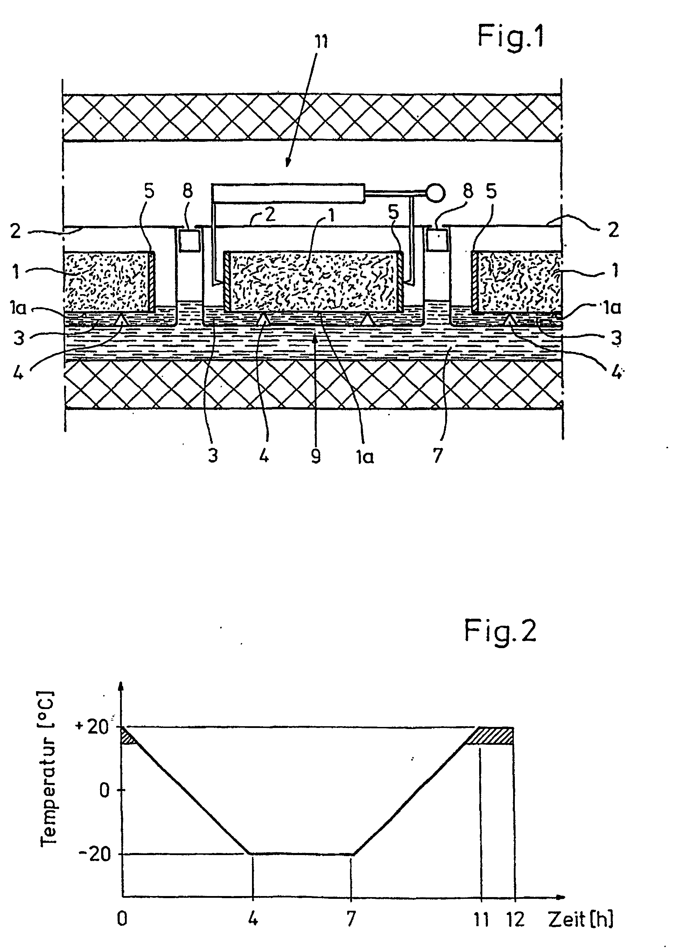

Die als Teilsicht schematisch in Figur 1 dargestellte Versuchsanordnung ist in der DE-OS 39 28 130 im einzelnen beschrieben, worauf zur Vermeidung ausführlicher Erläuterungen hingewiesen wird.

Der zu prüfende Festkörper wird vor dessen Einsetzen in die Versuchsanordnung gemäß Figur 1 auf die nachfolgenden Einsatzbedingungen konditioniert. Dies geschieht gemäß bevorzugtem Ausführungsbeispiel der Erfindung dadurch, daß der zu prüfende Festkörper - im folgenden Probekörper genannt - in definiertem Klima vorgetrocknet wird, bis ein festgelegter Feuchtezustand erreicht ist. Das Vortrocknen kann bereits in einem zugehörigen Probenbehälter 2 erfolgen.

Im Probenbehälter 2 lagern die Probekörper mit einer Beanspruchungsfläche 1a nach unten, und zwar so, daß die Beanspruchungsfläche gerade in eine Prüfflüssigkeit 3 eintaucht bzw. von ihr benetzt wird. Die Position der Beanspruchungsfläche 1a ist bei dem in Figur 1 dargestellten Ausführungsbeispiel definiert durch Aufständerungen 4. Der Flüssigkeitsspiegel der Prüfflüssigkeit 3 kann unter Verwendung einer in der Zeichnung nicht dargestellten Niveauregulierung eingestellt werden.

Bei dem in Figur 1 dargestellten Ausführungsbeispiel sind die Seitenflächen des Probekörpers 1 durch eine im wesentlichen abwitterungsbeständige Beschichtung 5 versiegelt. Dadurch ist gewährleistet, daß die Prüfflüssigkeit 3 nur durch bodenseitige, nicht aber durch seitliche Festkörperporen in den Probekörper eindringen kann. Die Prüfflüssigkeit kann daher nur durch kapillares Saugen von unten durch die Beanspruchungsfläche 1a in den Probekörper 1 eindringen. Dies ist wesentliche Voraussetzung dafür, daß die Prüfflüssigkeit den Probekörper bereits vor dessen Frost-Tau-Wechselbelastung gleichmäßig bis zu einem definierten Sättigungsgrad in den Festkörper penetriert.

Nach der Konditionierung werden die Probekörper in der Versuchsanordnung gemäß Figur 1 einer definierten Frost-Tau-Wechsel-Belastung unterworfen. Die Temperaturzu- und -abfuhr erfolgt in höchst vorteilhafter Weise über ein geregeltes Temperierbad 7, in das alle Probenbehälter 2 soweit eingetaucht sind, daß ein guter und gleichmäßiger thermischer Kontakt zwischen Temperierbad 7 und Prüfflüssigkeit 3 hergestellt ist. Die Eintauchtiefe der Behälter 2 in das Temperierbad 7 kann gegebenenfalls mit Hilfe von höhenverstellbaren Halterungen 8 variiert werden. Die Kühl- und Heizelemente des Temperierbades 7 sowie deren Regeleinrichtungen sind in Figur 1 nicht gezeigt. Ebensowenig sind die Komponenten zur Bewegung und Umwälzung der Temperierbadflüssigkeit in Figur 1 dargestellt; sie können bekannter Ausführung sein.

Das Temperierbad 7 wird zur Simulation eines Frost-Tau-Wechsels im Festkörper 1 einem vorgegebenen Temperatur-Zeit-Profil ausgesetzt, wie es beispielsweise über einen Zeitraum von 12 Stunden in Figur 2 dargestellt ist. Die Temperatur des Temperierbades wird an definierten Stellen gemessen, beispielsweise zentral unter dem Probebehälter 2, wie in Figur 1 durch einen Pfeil 9 veranschaulicht ist.

Wie oben gesagt, wird bei der Anordnung gemäß Figur 1 eine einachsige Wärmezu- und -abfuhr aus dem Temperierbad 7 über die Bodenfläche des Probenbehälters 2 und die Beanspruchungsfläche 1a des Probekörpers 1 erreicht. Dieser Wärmeaustausch findet aufgrund der optimalen Wärmeleitverhältnisse mit hohem Wirkungsgrad statt, so daß das geregelte Temperaturprofil gemäß Figur 2 relativ rasch, gleichmäßig und mit hoher Regelungsgenauigkeit auf den Probekörper 1 übertragen werden kann.

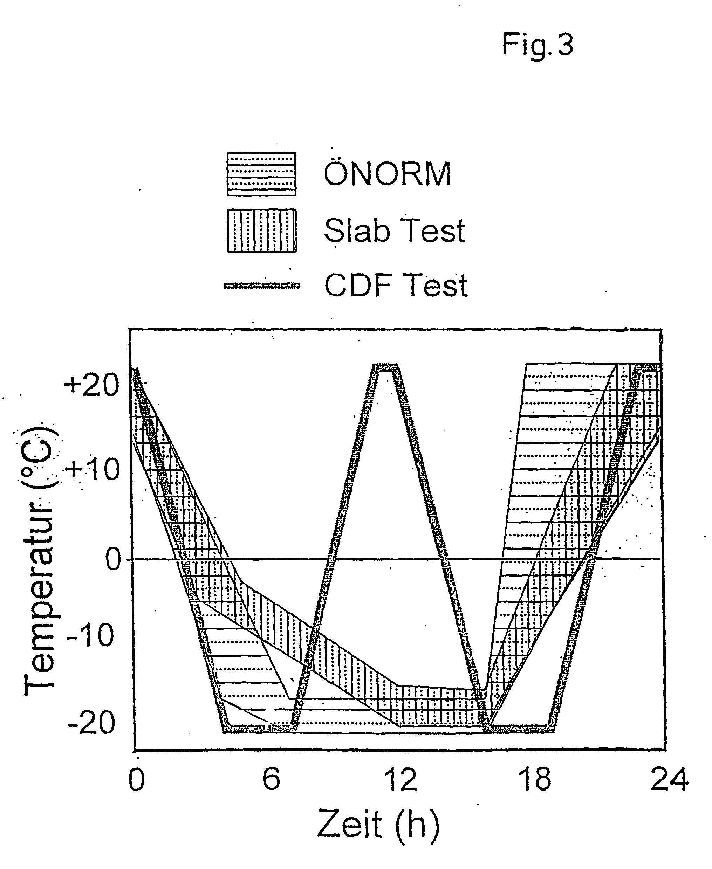

In Figur 3 sind drei Temperaturzyklen mit mittleren Streubreiten bei drei unterschiedlichen Prüfverfahren dargestellt. Zu erkennen ist, daß die früher verwendeten Prüfverfahren (ÖNORM und Slab Test) eine im Vergleich zu dem erfindungsgemäß genutzten CDF Test wesentlich größere Temperatur-Zeit-Streuung haben und dementsprechend ungenauer und zeitaufwendiger sind. Im Grunde werden bei dem erfindungsgemäß verwendeten Verfahren (CDF Test) während eines Temperaturzyklus herkömmlicher Prüfverfahren mehrere Temperaturzyklen vollständig durchlaufen; in Figur 3 sind zwei CDF-Zyklen gezeigt.

Die Untersuchungen der Schädigung der Probenkörper finden durch geeignete Messungen vorzugsweise außerhalb der Versuchsanordnung gemäß Figur 1 statt. Dies gilt insbesondere für die Bestimmung der äußeren Schädigung (DE-OS 39 28 130). Zu diesem Zweck wird der Behälter 2 mit dem Probekörper 1 aus der Versuchsanordnung gemäß Figur 1 herausgenommen und in einem Ultraschallbad über eine vorgegebene Zeit beschallt. Die Abwitterung sammelt sich dabei am Boden des Probebehälters 2. Die Prüflösung wird aus dem Probenbehälter dekantiert; der gesamte Feststoffrückstand wird getrocknet und gewogen. In Abhängigkeit von der Körpergröße bestimmt das Gewicht des gewonnenen Feststoffrückstands den Grad der äußeren Schädigung des Probekörpers.

In Figur 1 ist eine Längenmeßanordnung 11 schematisch dargestellt, mit deren Hilfe die Länge und die Längenänderungen des Probenkörpers 1 an entgegengesetzten Seitenflächen aufgenommen werden können. Die Längenmeßanordnung 11 ist hier in der Prüfanordnung gezeigt; selbstverständlich kann der Probenkörper auch aus dem Behälter 2 herausgenommen und in eine geeignete Längenmeßanordnung zur Bestimmung der Längen und Längenänderungen eingesetzt werden. Die Meßwertaufnahme kann - anders als in Figur 1 gezeigt - auch in mehreren übereinanderliegenden Ebenen erfolgen, um Unterschiede vor allem in den irreversiblen Längenänderungen in Zuordnung zu verschiedenen Schichten des Probenkörpers feststellen zu können. Außerdem kann es zweckmäßig sein, die Längenänderungen des Probenkörpers 1 vor und nach der Frost-Tau-Wechsel-Belastung in mehreren orthogonalen Richtungen festzustellen, um den Grad der inneren Schädigung des Körpers genauer und richtungsspezifisch bestimmen zu können. Die Versiegelungsschichten 5 können auch geeignete plattenförmige Körper sein, die einerseits die Aufnahmepunkte für die Längenmessung genauer definieren, andererseits aber auch als Beschallungsköpfe für Ultraschall-Laufzeitmessungen dienen können.

Zur Feststellung der inneren Schädigung können auch die in der Beschreibungseinleitung genannten anderen Verfahren verwendet werden.

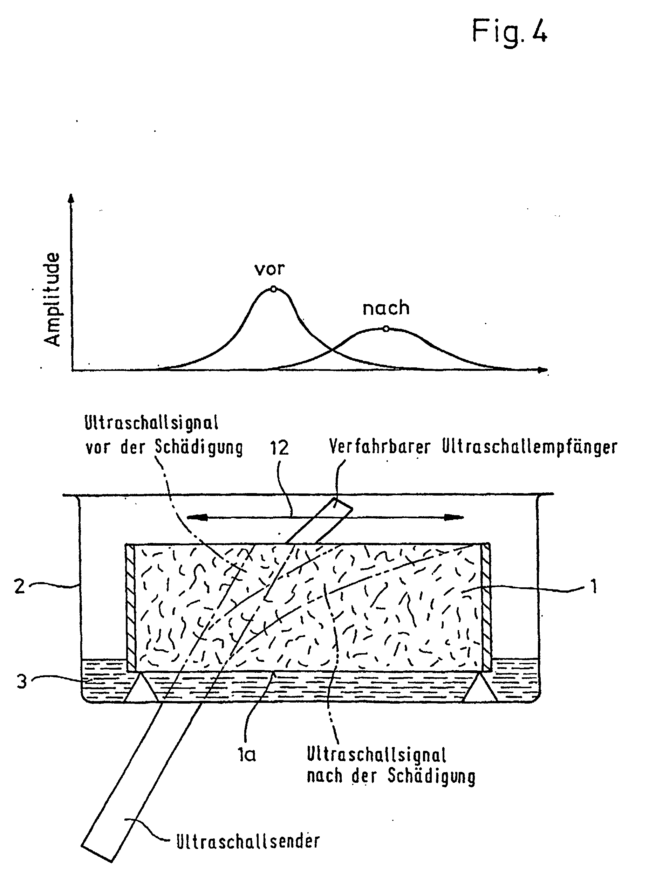

In Figur 4 ist ein besonderes und als solches neues Meßverfahren zur Bestimmung der inneren Schädigung eines Probenkörpers 1 veranschaulicht.

Ein Ultraschallsignal wird von einem Ultraschallsender schräg in die Beanspruchungsfläche 1a eingestrahlt. Vor der Frost-Tau-Wechsel-Belastung ist der Probenkörper 1 ungeschädigt, und das Ultraschallsignal erreicht eine Austrittsstelle an der Probenkörper-Oberseite unter einem Winkel, der dem Eintrittswinkel entspricht. Über dem Behälter ist anhand eines Amplituden-Weg-Diagramms die Schallintensität an der Austrittsstelle gezeigt ("vor"). Nach der Frost-Tau-Wechsel-Belastung ist der Probenkörper geschädigt. Das Ausmaß der inneren Schädigung äußert sich im Grad der Ablenkung des Ultraschallsignals und damit in dem geometrischen Ort der Austrittsstelle aus dem Probenkörper. Wie das Amplitudendiagramm oberhalb des Probenbehälters zeigt, ist der Maximalwert der Amplitude nach der Frost-Tau-Wechsel-Belastung deutlich verschoben. Aus dem Abstand der beiden Maximalwerte läßt sich der Grad der inneren Schädigung des Probenkörpers relativ genau bestimmen. Als Ultraschallempfänger dient bei der Anordnung gemäß Figur 4 ein auf einem Schlitten gelagerter und parallel zur Oberseite des Probenkörpers in Richtung des Doppelpfeils 12 verfahrbarer Ultraschallempfänger.

Es ist klar, daß verschiedene bekannte Meßanordnungen zur Bestimmung der für die innere Schädigung des Festkörpers repräsentativen physikalischen Größen verwendet werden können. Durch Messung der physikalischen Größen in mehreren unterschiedlichen Richtungen und/oder in parallelen Ebenen und/oder unter Verwendung unterschiedlicher Meßverfahren läßt sich der Grad der inneren Schädigung mit bisher unerreichter Genauigkeit bestimmen.

## Patentansprüche

1. Verfahren zur Prüfung des Frost-Tau-Widerstands und/oder des Frost-Tausalz-Widerstands von Festkörpern, wobei
a) der zu prüfende Festkörper durch Einstellung eines definierten Feuchtezustands auf die nachfolgenden Einsatzbedingungen konditioniert, z. B. vorgetrocknet wird;
b) der konditionierte Festkörper mit einer Beanspruchungsfläche nach unten in einen ein Prüfmedium aufnehmenden Probenbehälter derart eingesetzt wird, daß seine Beanspruchungsfläche in engem Kontakt mit dem Prüfmedium ist;
c) der Festkörper mindestens solange in Kontakt mit dem Prüfmedium gehalten wird, daß ein definierter Sättigungsgrad des Festkörpers erreicht wird; und
d) das Prüfmedium über ein Temperierbad einem vorgegebenen Temperatur-Zeit-Profil zur Simulation eines gleichmäßigen Frost-Tau-Wechsels im Festkörper unterworfen wird;
**dadurch gekennzeichnet,**
**daß** der zu prüfende Festkörper während der Verfahrensschritte b) bis d) derart im Probenbehälter gehalten wird, daß sowohl Feuchte als auch Wärme einachsig und im wesentlichen senkrecht zur Beanspruchungsfläche in den Körper transportiert werden; und
e) daß wenigstens eine Vergleichsmessung zur Bestimmung der Änderung einer physikalischen Größe an einem Festkörper vor und nach den Verfahrensschritten b) bis d) durchgeführt wird, wobei wenigstens eine der folgenden physikalischen Größenänderungen bestimmt wird:
Festigkeitsabfall;
irreversible Längenänderung;
Abfall des statischen E-Moduls;
Abfall des dynamischen E-Moduls;
Dämpfungsänderung des dynamischen E-Moduls;
Ausbreitungsänderung eines Ultraschallsignals,
wodurch die innere Schädigung des Festkörpers aufgrund des vorausgegangenen Angriffs durch Frost-Tau-Wechsel und das Prüfmedium festgestellt wird.

2. Verfahren nach Anspruch 1, **dadurch gekennzeichnet, daß** der Festkörper in Eigenschwingungen versetzt und aus deren Frequenz der dynamische E-Modul und/oder dessen Dämpfung bestimmt wird.

3. Verfahren nach Anspruch 1, **dadurch gekennzeichnet, daß** in den Festkörper Ultraschallwellen eingekoppelt werden und deren Laufzeit gemessen wird, und daß der dynamische E-Modul und/oder dessen Dämpfung aus der gemessenen Ultraschallaufzeit bestimmt wird bzw. werden.

4. Verfahren zur Prüfung des Frost-Tau-Widerstands und/oder des Frost-Tausalz-Widerstands von Festkörpern, nach einem der Ansprüche 1 bis 3, **dadurch gekennzeichnet, daß** der Festkörper im Kontakt mit einem Prüfmedium einem Frost-Tau-Wechsel unterworfen wird und daß der Festkörper vor und nach dem Frost-Tau-Wechsel einer vergleichenden Längenmessung zur Bestimmung der irreversiblen Längenänderung des Festkörpers sowie einer vergleichenden Ultraschallmessung unterworfen wird, wobei an zwei aneinander gegenüberliegenden Festkörperflächen, insbesondere an zwei Seitenflächen Meßplatten so angebracht werden, daß sie nicht abwittern können und daß aus der vergleichenden Ultraschallmessung die Änderung des dynamischen E-Moduls und/oder dessen Dämpfung bestimmt wird oder werden.

5. Verfahren nach einem der Ansprüche 1 bis 4, **dadurch gekennzeichnet, daß** der zu prüfende Festkörper derart versiegelt wird, daß das Prüfmedium nicht in die Seitenwände eindringen kann, während die Beanspruchungsfläche unversiegelt bleibt.

6. Verfahren nach einem der Ansprüche 1 bis 5, **dadurch gekennzeichnet, daß** der dynamische E-Modul und/oder dessen Dämpfung richtungsspezifisch, d.h. insbesondere parallel und/oder senkrecht zur Beanspruchungsfläche, dadurch bestimmt wird oder werden, daß der Ultraschall den zu prüfenden Festkörper gerichtet durchschallt und seine richtungsspezifische Laufzeit bestimmt wird.

7. Verfahren nach einem der Ansprüche 1 bis 6, **dadurch gekennzeichnet, daß** die irreversible Längenänderung richtungsabhängig, d.h. insbesondere parallel und/oder senkrecht zur Beanspruchungsfläche bestimmt wird.

8. Verfahren nach einem der Ansprüche 1 bis 7, **dadurch gekennzeichnet, daß** als Prüfmedium eine Prüfflüssigkeit verwendet wird, welche die Beanspruchungsfläche des Festkörpers benetzt.

9. Verfahren nach einem der Ansprüche 1 bis 7, **dadurch gekennzeichnet, daß** das Prüfmedium ein poröses Speichermedium und eine in diesem gespeicherte Prüfflüssigkeit enthält.

10. Verfahren nach einem der Ansprüche 1 bis 9, **dadurch gekennzeichnet, daß** die innere Schädigung des Festkörpers durch Messung der Änderung der Ausbreitungsrichtung eines Ultraschallsignals im Festkörper festgestellt wird.

## Claims

1. A method for testing the freeze-thaw resistance and/or freeze-thaw and de-icing agent resistance of solid bodies wherein:
a) the test specimen is conditioned, e.g. is pre-dried, by adjusting a defined moisture condition to the ensuing conditions of use;
b) the conditioned solid body, with a surface of exposure faced to the bottom, is placed into a specimen container for a test medium in such a manner that the surface of exposure is in close contact with the test medium;
c) a contact between the solid body and the test medium is maintained long enough to reach a defined degree of saturation of the solid body; and
d) the test medium above a coolant bath is subjected to a predetermined temperature-time profile to simulate a continuous freeze-thaw cycle in the solid body;
**characterized in that**
during the method steps b) through d), the test specimen is held in the specimen container in such a manner that moisture as well as heat are transported uniaxially, and substantially perpendicular to the surface of exposure, into the body; and
e) at least one reference measurement is carried out to determine the change of a physical quantity of a solid body before and after the method steps b) through d) wherein at least one of the following changes in physical quantities is determined:
decrease in strength;
irreversible change in length;
decrease in static modulus of elasticity;
decrease in dynamic modulus of elasticity;
change in damping of the dynamic modulus of elasticity;
change of the direction of propagation of an ultrasonic signal,
whereby the internal damage of the solid body owing to the preceding attack by freeze-thaw cycles and the test medium is determined.

2. The method according to claim 1, **characterized in that** said solid body is thrown into the natural vibrations and that from said vibrations the dynamic modulus of elasticity and/or its damping are/is determined.

3. The method according to claim 1, **characterized in that** ultrasonic waves are coupled into the solid body and their transit time is measured and that the dynamic modulus of elasticity and/or its damping is/are determined out of ultrasonic transit time.

4. A method for testing the freeze-thaw resistance and/or the freeze-thaw and de-icing agent resistance of solid bodies according to any of claims 1 to 3, **characterized in that** the solid body in contact with a test medium is subjected to a freeze-thaw cycle, and that the solid body, before and after freeze-thaw cycles, is subjected to a comparative length measurement to determine the irreversible change in length of the solid body as well as a comparative ultrasonic measurement, wherein measuring plates are mounted on two opposed surfaces of the solid body, especially on two lateral faces, in such a manner that they are not able to undergo scaling and that the change in the dynamic modulus of elasticity and/or its damping are/is determined from the comparative ultrasonic measurement.

5. A method according to any of claims 1 to 4, **characterized in that** the test specimen is sealed in such a manner that the test medium cannot penetrate into the sides of the specimen whilst the surface of exposure remains unsealed.

6. A method according to any of claims 1 to 5, **characterized in that** the dynamic modulus of elasticity and/or its damping is determined in a specific direction, i.e. in particular parallel or perpendicular to the surface of exposure, and this in such a way that the ultrasonic signal passes the tested body in a given direction and that the ultrasonic transit time is determined specifically direction-dependent.

7. A method according to any of claims 1 to 6, **characterized in that** the irreversible length change is determined in dependence on direction, i.e. in particular parallel and/or perpendicular to surface of exposure.

8. A method according to any of claims 1 to 7, **characterized by** the use of a test liquid, which wets the surface of exposure of the solid body, as test medium.

9. A method according to any of claims 1 to 7, **characterized in that** the test medium contains a porous storage medium and test liquid stored in it.

10. A method according to any of claims 1 to 9, **characterized in that** the internal damage of the solid body is determined by the measurement of the change in direction of propagation of an ultrasonic signal in the solid body.

## Revendications

1. Procédé de détermination de la résistance au gel-dégel et/ou de la résistance au gel-sel fondant de corps solides, dans lequel
a) le corps solide à examiner est, par établissement d'un état défini d'humidité, conditionné aux conditions d'emploi suivantes, par exemple préséché,
b) le corps solide conditionné est, avec une surface de sollicitation dirigée vers le bas, mis dans un récipient d'essai recevant un milieu d'essai de façon telle que sa surface de sollicitation soit en étroit contact avec le milieu d'essai,
c) le corps solide est maintenu en contact avec le milieu d'essai au moins jusqu'à ce que soit obtenu un degré défini de saturation du corps solide, et
d) le milieu d'essai est, par un bain de réglage de température, soumis à un profil température-temps fixé pour la simulation d'une alternance uniforme gel-dégel dans le corps solide,
**caractérisé par le fait**
**que** pendant les étapes b) à d), le corps solide à examiner est maintenu dans le récipient d'essai de façon telle qu'à la fois de l'humidité et de la chaleur soit amenées dans le corps uniaxialement et sensiblement perpendiculairement à la surface de sollicitation, et
e) qu'au moins une mesure comparative est exécutée avant et après les étapes b) à d) pour la détermination de la variation d'une grandeur physique sur le corps solide, au moins une des variations de grandeurs physiques suivantes étant alors déterminée :
baisse de résistance mécanique,
variation irréversible de longueur,
baisse du module d'élasticité statique,
baisse du module d'élasticité dynamique,
variation d'amortissement du module d'élasticité dynamique,
variation de propagation d'un signal ultrasonore,
de sorte que l'endommagement interne du corps solide est déterminé sur la base de l'attaque précédente par alternance gel-dégel et par le milieu d'essai.

2. Procédé selon la revendication 1, **caractérisé par le fait que** le corps solide est soumis une vibration de fréquence propre et le module d'élasticité dynamique et/ou l'amortissement de celui-ci est déterminé à partir de la fréquence de celle-ci.

3. Procédé selon la revendication 1, **caractérisé par le fait que** des ondes ultrasonores sont introduites dans le corps solide et le temps de transit de celles-ci est mesuré, et que le module d'élasticité dynamique et/ou l'amortissement de celui-ci est déterminé ou sont déterminés à partir du temps de transit mesuré.

4. Procédé de détermination de la résistance au gel-dégel et/ou de la résistance au gel-sel fondant de corps solides, selon l'une des revendications 1 à 3, **caractérisé par le fait que** le corps solide est, en contact avec un milieu d'essai, soumis à une alternance gel-dégel et que le corps solide est, avant et après l'alternance gel-dégel, soumis à une mesure comparative de longueur pour la détermination de la variation irréversible de longueur du corps solide ainsi qu'à une mesure comparative d'ultrasons, des plaques de mesure étant appliquées sur deux faces opposées, en particulier sur deux faces latérales, du corps solide de façon qu'elles ne puissent pas être endommagées, et que la variation du module d'élasticité dynamique et/ou de l'amortissement de celui-ci est déterminée à partir de la mesure comparative d'ultrasons.

5. Procédé selon l'une des revendications 1 à 4, **caractérisé par le fait que** le corps solide à examiner est scellé de façon telle que le milieu d'essai ne puisse pas pénétrer dans les parois latérales, tandis que la surface de sollicitation reste non scellée.

6. Procédé selon l'une des revendications 1 à 5, **caractérisé par le fait qu'**on détermine le module d'élasticité dynamique et/ou l'amortissement de celui-ci dans une ou des directions fixées, c'est-à-dire en particulier parallèlement et/ou perpendiculairement à la surface de sollicitation, en faisant traverser par les ultrasons le corps solide à essayer et déterminant le temps de transit de ceux-ci dans la direction fixée.

7. Procédé selon l'une des revendications 1 à 6, **caractérisé par le fait qu'**on détermine la variation irréversible de longueur en fonction de la direction, c'est-à-dire en particulier parallèlement et/ou perpendiculairement à la surface de sollicitation.

8. Procédé selon l'une des revendications 1 à 7, **caractérisé par le fait qu'**on utilise comme milieu d'essai un liquide d'essai qui mouille la surface de sollicitation du corps solide.

9. Procédé selon l'une des revendications 1 à 7, **caractérisé par le fait que** le milieu d'essai contient un milieu magasin poreux et un liquide d'essai emmagasiné dans celui-ci.

10. Procédé selon l'une des revendications 1 à 9, **caractérisé par le fait que** l'endommagement interne du corps solide est déterminé par mesure de la variation de la direction de propagation d'un signal ultrasonore dans le corps solide.
